# EUROPÄISCHE PATENTSCHRIFT

(11) **EP 1 461 198 B1**
(45) Veröffentlichungstag und Bekanntmachung des Hinweises auf die Patenterteilung: **18.07.2007**
(21) Anmeldenummer: 02795125.0
(22) Anmeldetag: 09.12.2002
(51) Int. Cl.: B29C 67/00

(54) **VERFAHREN ZUR HERSTELLUNG EINES AUS MEHREREN SCHICHTEN BESTEHENDEN DREIDIMENSIONALEN BAUTEILS**
METHOD FOR THE PRODUCTION OF A MULTI-LAYERED THREE-DIMENSIONAL COMPONENT
PROCEDE DE PRODUCTION D'UN COMPOSANT TRIDIMENSIONNEL COMPOSE DE PLUSIEURS COUCHES

(30) Priorität: 11.12.2001 DE 10160772
(43) Veröffentlichungstag der Anmeldung: 29.09.2004
(73) Patentinhaber: TRUMPF Werkzeugmaschinen GmbH + Co. KG, 71254 Ditzingen (DE)
(72) Erfinder: GRAF, Daniel, 71254 Ditzingen (DE)
(74) Vertreter: Maser, Jochen
(86) Internationale Anmeldenummer: PCT/EP2002/013916
(87) Internationale Veröffentlichungsnummer: WO 2003/049926

(56) Entgegenhaltungen:
- EP-A- 0 764 487
- WO-A-01/72502
- US-A- 5 637 175
- US-A- 6 056 843

## Beschreibung

Die Erfindung betrifft ein Verfahren zur Herstellung eines aus mehreren Schichten bestehenden dreidimensionalen Bauteils.

Zur Herstellung von Prototypen und Kleinserien als auch zur schnellen Werkzeug- und Bauteileherstellung ist ein LOM-Verfahren (Laminated Object Manufacturing) entwickelt worden, dessen Technik auf dem schichtweisen Aufbau mehrerer Materialschichten beruht, welche die Körpergeometrie des herzustellenden Körpers aufweist. Bei der Herstellung wird auf die Daten einer CAD-Konstruktion zugegriffen. Diese Daten werden aufbereitet zur Ansteuerung entsprechender Anlagen, welche beim Schichtaufbau zum Einsatz kommen und die jeweilige Geometrie der entsprechenden Schicht herstellt, um ein dreidimensionales Bauteil zu bilden. Die Anforderungen an derartige Verfahren steigen aufgrund der Anforderung, dass auch dünne Schichten mit einer Dicke von beispielsweise 0,1 bis 1,0 mm zu verarbeiten sind, um ein Bauteil herzustellen.

Aus der US-PS 5,637,175 geht ein Verfahren zur Herstellung eines schichtweise aufgebauten Bauteils hervor, bei welchem in einem ersten Verfahrensabschnitt eine zumindest einseitig mit Klebemitteln beschichtete Materialbahn auf einer Grundplatte oder einer zuvor aufgebrachten Materialbahn in einer Bearbeitungsstation aufgebracht wird. Anschließend wird eine Kontur in die oberste Materialbahn eingeschnitten, durch die eine Bauschicht und ein Abfallmaterial ausgebildet werden, wobei anschließend das Abfallmaterial entfernt wird. Zur Stützung der einzelnen Laminatschichten während des Laminierprozesses wird ein Pulver in eine Form gefüllt, um die Bauschicht während dem weiteren Prozess zu stützen.

Des Weiteren geht aus dieser Druckschrift ein Verfahrensabschnitt hervor, bei dem die aufzubauenden Schichten in einer aufgeheizten Kammer vorgesehen sind. Hierbei ist vorgesehen, dass die Temperatur der Kammer gerade unterhalb dem Schmelzpunkt des Lotes liegt, wohingegen zum Verbinden der obersten Schicht zu dem Stapel eine Heizrolle vorgesehen ist, welche den Lötprozess unterstützt. Dieses Verfahren weist den Nachteil auf, dass aufgrund der hohen Temperatur ein Aufschmelzen der unmittelbar unterhalb den zwei zu verbindenden Schichten liegende Lotschicht erfolgen kann, wodurch die Gefahr der Verschiebung der Schichten aufgrund des Abrollens der Heizrolle zueinander gegeben ist. Dadurch kann eine exakte Herstellung des Bauteils mit hoher Prozesssicherheit nicht gegeben sein.

Aus der WO 99/02342 ist des Weiteren ein Verfahren und eine Vorrichtung zur Herstellung eines Bauteils mit einem schichtweisen Aufbau von Metallfolien bekannt geworden. Bei diesem Verfahren wird ein Verbundmaterial eingesetzt, bei dem die für das Bauteil vorgesehene Schicht auf einem Trägermaterial angeordnet ist. Zwischen der Schicht und dem Trägermaterial ist eine niedrig schmelzende Lotschicht vorgesehen. Auf der dem Trägermaterial gegenüber liegenden Seite ist eine höher schmelzende Lotschicht aufgebracht. Dieses Trägermaterial wird einer ersten Bearbeitungsstation zugeführt. Hierbei wird beispielsweise durch einen Laser die Kontur in die Schicht eingebracht. In einer nachfolgenden Station wird das Verbundmaterial oberhalb der höher schmelzenden Lotschicht aufgeheizt und mittels eines Hubtisches eine den Stapel aufnehmende Grundplatte auf und ab bewegt. Unter Druck wird die Schicht auf den Stapel aufgebracht. Durch Abkühlen des höher schmelzenden Lotes verbleibt die aufzubringende Schicht auf dem Stapel. Das nieder schmelzende Lot bleibt noch flüssig, so dass die neu aufgebrachte Schicht auf dem Trägermaterial abgehoben wird.

Dieses Verfahren erfordert die Bereitstellung eines aufwendigen Verbundmaterials und eine exakte Positionierung der Kontur der aufzubringenden Schicht zum Stapel für die Herstellung der gewünschten Bauteilgeometrie.

Der Erfindung liegt deshalb die Aufgabe zugrunde, ein Verfahren zu schaffen, welche in einfacher Weise eine maßgenaue Herstellung und spannungsfreie Anordnung der einzelnen Schichten zum schichtweisen Aufbau eines Bauteils ausgehend von einem CAD-Modell ermöglicht.

Diese Aufgabe wird erfindungsgemäß durch ein Verfahren gemäß den Merkmalen des Anspruchs 1 gelöst.

Das erfindungsgemäße Verfahren weist den Vorteil auf, dass ein In einem ersten Verfahrensabschnitt durch einen schichtweisen Aufbau von zumindest zwei Materialbahnen hergestelltes Bauteil in seiner Gesamtheit in einem zweiten Verfahrensabschnitt einer Wärmebehandlung unterzogen wird, um eine stoffschlüssige Werkstoffverbindung durch einen Löt-, Schweiß- oder Sinterprozess zwischen den einzelnen Materialbahnen zu bilden. In dem ersten Verfahrensabschnitt zur Herstellung des schichtweisen Aufbaus des dreidimensionalen Bauteils aus zumindest höher temperaturbeständigen Materialbahnen ist auf zumindest einer Seite der Materialbahn eine Klebstoffschicht vorgesehen, welche ermöglicht, dass nach dem Auflegen der obersten Materialbahn auf den darunter liegenden Schichtaufbau zumindest eine Vorfixierung oder eine Fixierung ermöglicht ist. Im Anschluss daran wird die gewünschte Kontur für die entsprechende Schicht eingebracht. Die nicht gewünschten Bereiche werden entfernt. Dadurch ist eine Verringerung der Anzahl der Arbeitsschritte, ein schneller schichtweiser Aufbau für eine Bauteilgeometrie und darüber hinaus eine exakte Ausbildung ermöglicht.

In dem zweiten Verfahrensabschnitt der Erfindung ist vorgesehen, dass der schichtweise Aufbau zumindest teilweise von einem Pulver umgeben in einer Kammer zur Wärmebehandlung eingesetzt wird. Durch das Einsetzen des schichtweisen Aufbaus in ein Pulverbett können jegliche beliebige Geometrien in der Kammer für die Wärmebehandlung positioniert werden. Darüber hinaus bleibt die Geometrie des schithtweisen Aufbaus bei der Wärmebehandlung im Pulverbett aufrecht erhalten.

Anschließend wird die Kammer in einer Aufheizphase auf eine Temperatur aufgeheizt, welche höher als eine Verdampfungstemperatur eines zwischen den einzelnen Schichten vorgesehenen Klebemittels ist. In der Aufheizphase wird somit aufgrund der Temperatur das Klebemittel als Zwischenschicht aus den einzelnen Schichten ausgetrieben und verdampft, so dass der schichtweise Aufbau für einen nachfolgenden Prozess zur stoffschlüssigen Werkstoffverbindung vorbereitet und durchgeführt wird.

Nach einer vorteilhaften Ausgestaltung des Verfahrens wird die Kammer mit einem zum Schichtaufbau, Klebemittel, Lot- oder Schweißmittel neutralem Pulver gefüllt. Dadurch wird ein Anhaften oder Anbacken des Pulvers während der Wärmebehandlung an den schichtweisen Aufbau verhindert. Das das Bauteil umgebende Pulver beeinflusst die Bauteilgeometrie dadurch nicht.

Der schichtweise Aufbau wird vorteilhafterweise in der Kammer mit einem Druck belastet. Dadurch wird einerseits ein Ausgleich für den Schwindungsprozess aufgrund des ausgetriebenen Klebermittels ermöglicht. Zum anderen wird der in dem Pulverbett notwendige Druck für die flächige Anlage der Schichten zueinander aufrecht erhalten, um eine gleichmäßige stoffschlüssige Verbindung zwischen den einzelnen Materialbahnen herzustellen. Das Pulverbett, welches den schichtweisen Aufbau auch umgibt, weist den Vorteil auf, dass während der Druckbelastung von oben die umgebenden Bereiche in ihrer Geometrie konstant bleiben, so dass auch die einzelnen Schichten in der vorgesehenen Position ohne eine horizontale Verschiebung gegeneinander während der Wärmebehandlung zueinander positioniert bleiben. Eine Änderung der Bauhöhe des schichtweisen Aufbaus aufgrund des ausgetriebenen Klebemittels wird durch das Pulver ausgeglichen und beeinflusst die Lage der einzelnen Schichten zueinander nicht.

Nach einer weiteren vorteilhaften Ausgestaltung der Erfindung ist vorgesehen, dass die Kammer mit einem nicht lötbaren, nicht schweißbaren und nur schwer sinterbaren Pulver gefüllt wird. Das Pulver weist vorteilhafterweise ein chemisch neutrales Verhalten gegenüber dem Bauteil auf. Nach der Wärmebehandlung wird ein problemloses Lösen des dreidimensionalen Bauteils aus dem Pulverbett ermöglicht. Als Pulvermaterial sind bevorzugt Bornitridpulver, Korundpulver oder Graphitpulver vorgesehen.

Nach einer weiteren vorteilhaften Ausgestaltung der Erfindung ist vorgesehen, dass die Aufheizphase bei einer Temperatur beendet wird, die oberhalb der Verdampfungstemperatur des Klebemittels liegt und dass ein zwischen den Materialbahnen des schichtweisen Aufbaus vorgesehenes Lot in einen fließfähigen Zustand übergeführt wird. Dadurch kann die Wärmebehandlung mit einem Lötprozess abgeschlossen werden.

Alternativ ist vorgesehen, dass bei Materialbahnen, welche ausschließlich ein Klebemittel aufweisen, die Aufheizphase bei einer Temperatur beendet wird, bei der ein Schweißen, insbesondere Diffusionsschweißen der Materialbahnen, erfolgt. Dadurch können vollmetallische Bauteile hergestellt werden.

Durch die vorteilhafte Ausgestaltung und Anordnung des Klebemittels kann somit erzielt werden, dass in dem ersten Verfahrensabschnitt einerseits eine exakte Positionierung der zuletzt aufgebrachten Schicht auf die darunter liegenden Schichten gegeben ist und dass durch die Aufhebung der Haftwirkung aufgrund von geringer Erwärmung, welche partiell durch Einwirken von beispielsweise einem Laserstrahl gegeben ist, in den benachbarten Bereichen keine inneren Spannungen erzeugt werden. Dadurch kann ein maßgenauer schichtweiser Aufbau nach dessen Fertigstellung in einem zweiten Verarbeitungsschritt einer Wärmebehandlung zur zumindest teilweisen stoffschlüssigen Werkstoffverbindung unter Beibehaltung der maßhaltigkeit unterzogen werden.

Die Vorrichtung zur Herstellung einer stoffschlüssigen Verbindung bei einem Bauteil, bestehend aus einem schichtweisen Aufbau, zur Durchführung des zweiten Verfahrensabschnitts gemäß dem oben beschriebenen Verfahren, weist den Vorteil auf, dass sowohl mit als auch ohne Grundplatte eine Wärmebehandlung des schichtweisen Aufbaus ermöglicht ist. Darüber hinaus ist unabhängig der Geometrie des herzustellenden Bauteils eine Wärmebehandlung durchführbar, die eine stoffschlüssige Verbindung zwischen den einzelnen Schichten ermöglicht. Die einzelnen Schichten in der übereinandergestapelten Lage führen keine Relativbewegung zueinander aus und behalten somit ihre exakte Position zueinander bei, obwohl die Klebeverbindung zwischen den einzelnen Schichten aufgrund des Austreiben des Klebemittels aufgehoben ist.

Anhand der nachfolgenden Zeichnungen wird die erfindungsgemäße Herstellung eines Bauteils näher beschrieben. Es zeigen:
- Figur 1: eine schematische Darstellung einer Anlage zur Herstellung eines schichtweisen Aufbaus in einem ersten Verfahrensabschnitt,
- Figuren 2 a bis g: eine schematische Schnittdarstellung der für den schichtweisen Aufbau vorgesehenen Materialbahnen mit unterschiedlichem Aufbau,
- Figuren 3 a bis c: schematische Darstellungen zum Einbringen einer Kontur und zum Entfernen von nicht gewünschten Bereichen und
- Figuren 4 a und b: schematische Darstellungen der erfindungsgemäßen Vorrichtungen zur Durchführung eines zweiten Verfahrensabschnittes.

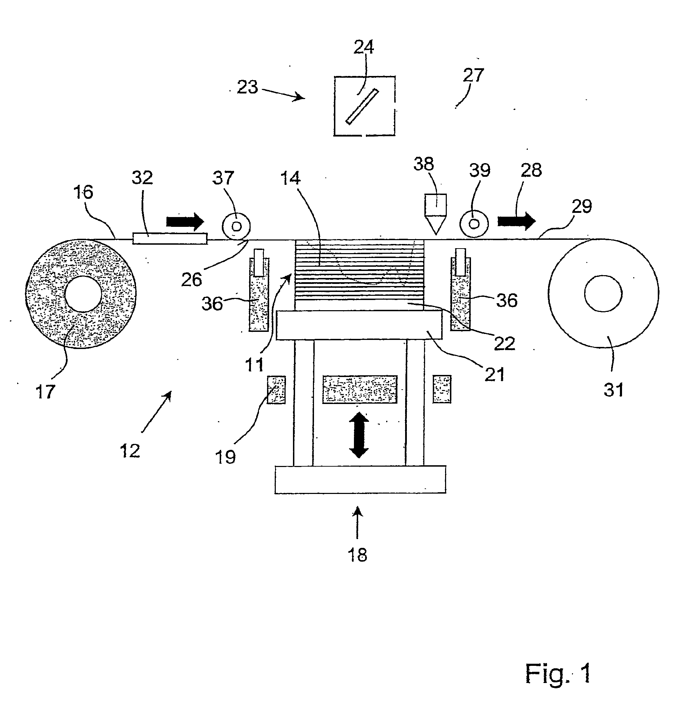

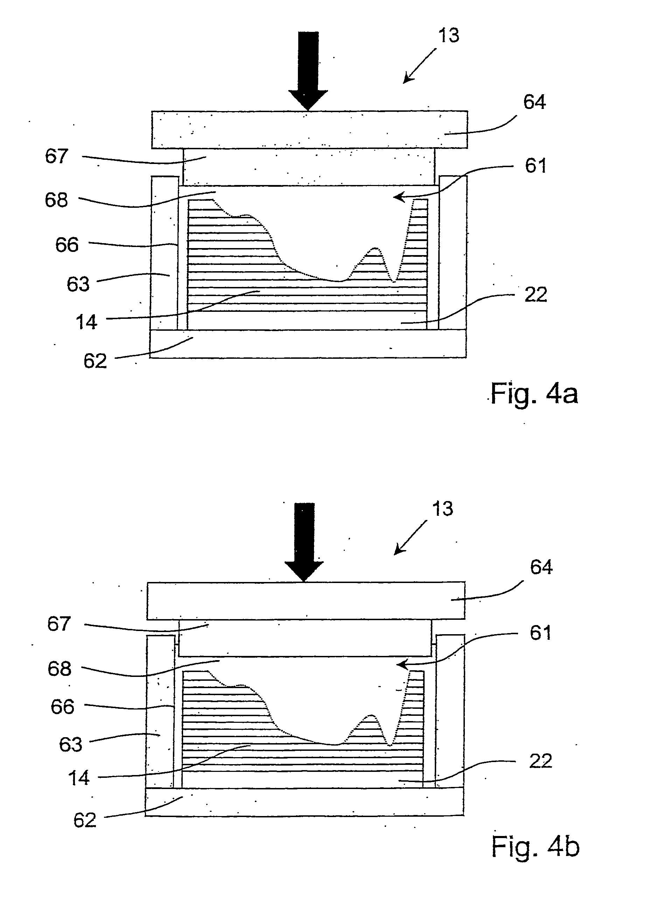

Zur Herstellung eines aus mehreren Schichten bestehenden Bauteils 11 ist in Figur 1 eine Anlage 12 dargestellt, welche beispielsweise die Durchführung des Verfahrens gemäß einem ersten Verfahrensabschnitt ermöglicht. In Figur 4 a und b ist eine Vorrichtung 13 dargestellt, welche beispielsweise die Durchführung eines zweiten Verfahrensabschnitts ermöglicht. Die Anlage 12 und die Vorrichtung 13 sind in Reihe geschalten und können beispielsweise durch ein Transport- oder Handlingsystem, welches nicht näher dargestellt ist, miteinander verbunden sein. Durch die Anlage 12 und Vorrichtung 13 ist die Herstellung eines dreidimensionalen Bauteils auf der Basis eines dreidimensionalen CAD-Modells ermöglicht. Beispielsweise können dadurch Prototypen oder Kleinserien hergestellt werden. Ebenso ist die schnelle Herstellung einzelner Werkzeuge realisierbar.

Nachfolgend wird die Anlage 12 zur Durchführung des ersten Verfahrensschrittes näher beschrieben.

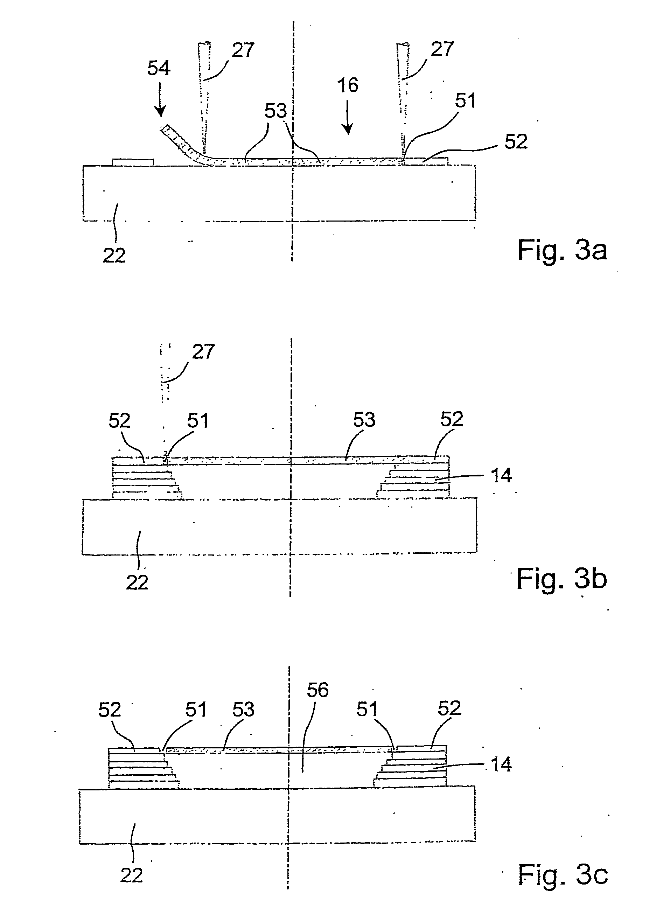

In der Anlage 12 wird eine Materialbahn 16 für einen schichtweisen Aufbau 14 verwendet. Die Materialbahn 16 wird von einer Rolle 17 abgezogen und einer Bearbeitungsstation 18 zugeführt. Die Bearbeitungsstation 18 besteht aus einer Führungseinheit 19 mit einem Hubtisch 21, auf welchem eine Grundplatte 22 zum Aufbau der einzelnen Schichten vorgesehen ist. Oberhalb der Grundplatte 22 ist eine Bearbeitungseinheit 23 vorgesehen, welche beispielsweise aus einem Laser besteht, von dem aus ein Laserstrahl 27 über einen Scanner 24 auf die Grundplatte 22 umgelenkt wird, um eine auf der Grundplatte 22 positionierte Materialbahn 16 zu bearbeiten. Der Laserstrahl 27 kann ebenso durch weitere Optiken, welche zumindest in einem XY-Achsensystem bewegbar angeordnet sind, umgelenkt werden. Die der Bearbeitungseinheit 23 zugeführte Materialbahn 16 weist zumindest an einer Seite, vorzugsweise an deren Unterseite eine Schicht aus Klebemittel 26 auf, so dass der in der Bearbeitungsstation 18 eingebrachte Bereich der Materialbahn 16 auf der Grundplatte 22, sofern es sich um die erste Schicht handelt, oder auf einer zuvor aufgebrachten Schicht aufgeklebt wird. Durch einen Laserstrahl 27 wird eine Kontur zumindest in die oberste Materialbahn 16 eingebracht. Durch diese Lasergravur kann ein exakter Schnittspalt zwischen dem verbleibenden Material und dem nicht gewünschten Material bzw. Abfallmaterial hergestellt werden. Dies wird nachfolgend in den Figuren 3 a bis c im einzelnen näher beschrieben.

Nachdem die Kontur durch den Laserstrahl 27 in die Materialbahn 16 eingebracht wurde, wird der Hubtisch 21 um einen Betrag in Z-Richtung nach unten bewegt. Die Materialbahn 16 wird in Pfeilrichtung 28 weiter getaktet, so dass eine Abfallmaterialbahn 29 auf einer Rolle 31 aufgerollt wird.

Anstelle der Bereitstellung der Materialbahn 16 auf Rollen 17 kann auch eine Plattenware vorgesehen sein. Über Handhabungssysteme können einzelne Platten auf ein Transportband gelegt werden oder der Bearbeitungsstation 18 zugeführt und nach der Bearbeitung wieder entnommen oder direkt aufgelegt werden.

Das in der Bearbeitungsstation 18 hergestellte Bauteil 11 durch einen schichtweisen Aufbau 14, bei dem die einzelnen übereinander liegenden Materialbahnen 16 miteinander verklebt sind, wird als Grünling oder Grünteil bezeichnet. Das verwendete Klebemittel ist derart ausgebildet, dass eine hinreichende Haftwirkung zwischen den einzelnen Materialbahnen 16 gegeben ist, um die zueinander positionierten Materialbahnen 16 nach beispielsweise einer Lasergravur in einer exakten Position zueinander zu fixieren. Darüber hinaus ist das Klebemittel derart eingestellt, dass durch einen Laserstrahl 27 die Klebeverbindung an den Stellen geschwächt beziehungsweise aufgehoben wird, welche das Abfallmaterial oder zu entfernende Material zu einer darunter liegenden Schicht fixiert.

Die Materialbahn 16 ist bevorzugt aus einem höher temperaturbeständigen Material ausgebildet. Insbesondere metallische Materialien sind als Materialbahn 16 vorgesehen. Alternativ können auch keramische Materialien eingesetzt werden. Bei der Ausbildung der Materialbahn 16 als Metallfolie sind beispielsweise Schichtdicken im Bereich von 0,05 mm bis 2 mm vorgesehen. Durch die Verwendung von dünnen Schichtdicken kann die Herstellungsgenauigkeit der Bauteile erhöht sein.

Der in der Bearbeitungsstation 18 hergestellte schichtweise Aufbau 14 entspricht in Z-Richtung gesehen nicht der tatsächlichen Höhe, da zwischen den einzelnen Schichten zumindest das Klebemittel vorgesehen ist. In einem nachfolgenden zweiten Verarbeitungsschritt wird das Klebemittel ausgetrieben, so dass das bei dem Grünteil vorliegende Baumaß gegenüber dem endgültigen Baumaß verringert ist. Um eine exaktes Baumaß in Z-Richtung nach Fertigstellung des Bauteils zu erzielen, ist eine Schichtdickenmesseinrichtung 32 vor der Bearbeitungsstation 18 vorgesehen, welche die tatsächliche Schichtdicke der zugeführten Materialbahn 16 ohne Klebeschicht ermittelt. Durch Addition der einzelnen ermittelten Schichtdicken kann sehr exakt die Bauteilhöhe für das fertiggestellte Bauteil bestimmt werden. Dadurch können auch die Schwankungen in der Schichtdicke erfasst werden, welche +/- 4% betragen können und bei einer Vielzahl von Schichten sich beträchtlich auswirken können. Die Schichtdickenmessung kann an einer Materialbahn 16 durchgeführt werden, welche keine oder zumindest an einer Seite eine Klebeschicht aufweist. Sofern für die Schichtdickenmessung bei bestimmten Materialien von Vorteil ist, dass auf der Materialbahn 16 keine Beschichtung vorgesehen ist, kann im Anschluss an die Schichtdickenmesseinrichtung 32 eine Klebemittelauftrageinheit vorgesehen sein. Diese Klebemittelauftrageinheit kann beispielsweise in Form einer Breitschlitzdüse zur Aufbringung eines Klebemittels, als Walzensystem oder Sprühsystem vorgesehen sein. Des weiteren kann gleichzeitig oder im Anschluss an die Klebemittelauftrageinheit anwendungsspezifisch auch die Aufbringung von beispielsweise einem Lot oder dergleichen vorgesehen sein.

Sofern die Materialbahn 16 als Rollenware bereitgestellt wird und bereits mit einem Klebemittel auf zumindest einer Seite der Materialbahn 16 versehen ist, kann vorteilhafterweise vorgesehen sein, dass zwischen den einzelnen aufgewickelten Bahnen eine Trennschicht vorgesehen ist. Diese wird unmittelbar vor der Schichtdickenmesseinrichtung 32 über eine Walzenanordnung abgezogen, so dass einerseits ein leichtes Abwickeln der auf der Rolle 17 bereitgestellten Materialbahn 16 gegeben ist und im Anschluss daran eine Schichtdickenmessung durchführbar ist.

Nach Zuführung eines unverbrauchten Abschnittes der Materialbahn 16 in die Bearbeitungsstation 18 wird der Hubtisch 21 in eine Bearbeitungsposition übergeführt. Gleichzeitig wird die neue Materialbahn 16 in die Bearbeitungsstation 18 eingebracht. Durch zumindest eine Andruckwalze 37 wird die neu zugeführte Materialbahn 16 auf der darunter liegenden Schicht angedrückt und aufgeklebt. Alternativ zu der oder den Andruckwalzen 37 kann auch eine Andrückplatte vorgesehen sein, welche in die Bearbeitungsstation 18 zum Aufbringen der Andruckkraft eingebracht wird. Das Verkleben der Materialbahn in der Bearbeitungsstation 18 kann kalt oder unter Temperatureinfluss, beispielsweise durch erwärmte Walzen, erfolgen. Nach Durchführung der Lasergravur werden die Aushebezylinder 36 an der Unterseite der Materialbahn positioniert und bilden ein Gegenlager, damit beim Absenken des Hubtisches 21 die neu aufgebrachte Schicht gegenüber der Materialbahn 16 frei wird. Im Anschluss daran werden die Aushebezylinder 36 abgesenkt und die Materialbahn 16 weitergetaktet. Alternativ können die Aushebezylinder 36 die Materialbahn 16 nach oben in Richtung Bearbeitungseinheit 23 über das Bauteil 11 anheben. Im Anschluss daran wird die Materialbahn 16 weitergetaktet und dann die Aushebezylinder 36 abgesenkt.

Die in Figur 1 dargestellte Anordnung der Bearbeitungsstation 18 kann ebenso auch um 180° gedreht angeordnet sein. Dadurch kann das Abfallmaterial selbständig aus dem schichtweisen Aufbau 14 durch die Schwerkraft herausfallen. Bei der in Figur 1 dargestellten Ausführungsform ist eine Absaugeinheit 38 vorgesehen, welche das Abfallmaterial ansaugt und aus der Bearbeitungsstation 18 entfernt.

Nachdem das Abfallmaterial beseitigt ist, kann Reinigungsvorrichtung 39, insbesondere eine Reinigungswalze oder -bürste, über die zuletztaufgebrachte Materialbahn 16 des schichtweisen Aufbaus 14 geführt werden, um die Oberfläche zu reinigen und gegebenenfalls auch vorhandenes Abfallmaterial zu beseitigen und für die nachfolgende Schicht vorzubereiten. Des weiteren kann durch die Reinigungswalze 39, sofern auf der Oberseite der Materialbahn 16 keine weitere Schicht, wie beispielsweise Klebemittel oder Lot, vorhanden ist, zumindest teilweise auch ein Grat aufgrund der Lasergravur geglättet werden. Ebenso können sonstige Verunreinigungen, Staubreste oder dergleichen, welche bei der Bearbeitung der Materialbahn 16 durch den Laserstrahl 27 und dem Lösen zumindest einer auf der Materialbahn 16 aufgebrachten Klebeschicht entfernt werden. Die Reinigungsvorrichtung und Absaugeinheit bzw. Ansaugvorrichtung können auch in einer Einheit vorgesehen sein. Dadurch kann bei einem einmaligen Überfahren der obersten Schicht sowohl die Reinigung als auch die Entfernung des Abfallmaterials ermöglicht sein.

In der Bearbeitungsstation 18 ist des weiteren zumindest ein Sensor vorgesehen, welcher die aktuelle Bauteilhöhe des bislang hergestellten Grünteils erfasst, um den Hubtisches 21 exakt zur zugeführten Materialbahn 16 zu positionieren. Gleichzeitig dient die Überwachung und Erfassung der aktuellen Bauteilhöhe zur Einstellung des Laserfokus, um einen exakten Schnittspalt in die oberste Materialbahn einzubringen und um die darunter liegende Materialbahnen nicht zu beeinträchtigen.

Die in Figur 1 dargestellte und näher beschriebene Anlage 12 kann beispielsweise auch für die Herstellung eines Bauteils aus Papier, Kunststoffmaterial, Holz oder sonstigen Materialien eingesetzt werden. Die Verfahrensparameter, insbesondere hinsichtlich der Leistung des Laserstrahles 27, sind entsprechend an die ausgewählten Materialien anzupassen. Die in Figur 1 beschriebene Anlage 12 ist nicht zwingend für die Durchführung eines ersten Verfahrensabschnittes gemäß der Erfindung vorgesehen. Vorteilhafterweise wird diese Anlage hierfür eingesetzt. Weitere Anlagen, welche die Durchführung eines ersten Verfahrensschrittes zum Aufbau eines schichtweisen Aufbaus ermöglichen, sind ebenso denkbar. Darüber hinaus ist diese Anlage unabhängig von einem zweiten Verfahrensschritt einsetzbar, sofern anwendungsspezifisch die Anforderungen genügen, dass die übereinander gestapelten Materialbahnen 16 zur Bildung eines schichtweisen Aufbaus 14 durch eine Klebe- oder Haftverbindung zueinander fixiert sind. Die Materialbahnen selbst sind durch eine derartige Klebe- oder Haftverbindung frei von inneren Verspannungen.

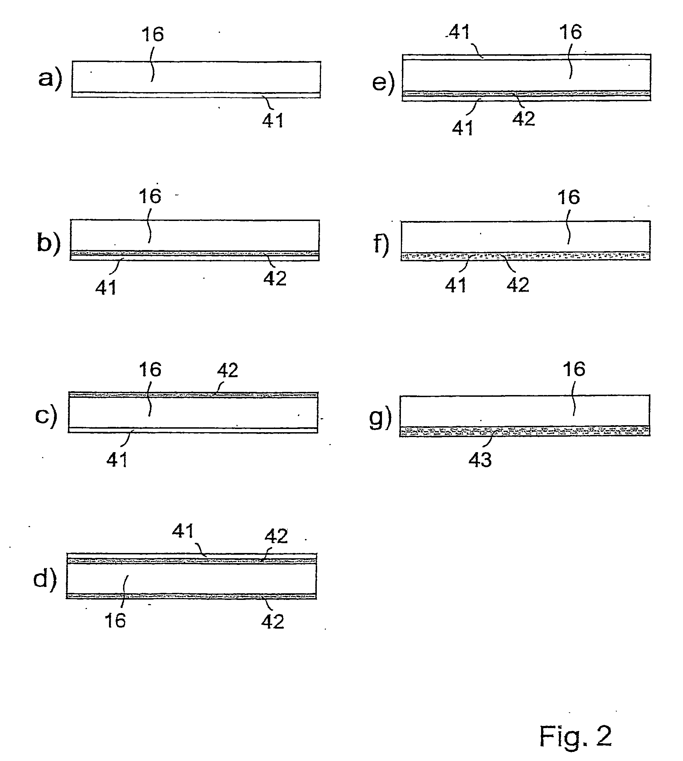

In den Figuren 2 a bis g sind mehrere Materialbahnen 16 dargestellt, die beispielsweise zur Durchführung des erfindungsgemäßen Verfahrens einsetzbar sind.

In Figur 2 a weist die Materialbahn 16 eine Klebemittelschicht 41 auf, welche bevorzugt auf einer Unterseite der Materialbahn 16 angeordnet ist. Die Klebemittelschicht 41 kann ebenso auf der Oberseite der Materialbahn 16 angeordnet sein als auch beidseitig zur Materialbahn 16.

In Figur 2 b ist zusätzlich zur Klebemittelschicht 41 eine Lotschicht 42 vorgesehen. Diese Lotschicht 42 ist zwischen der Materialbahn 16 und der Klebemittelschicht 41 angeordnet. Dadurch kann zunächst die Klebeschicht 41 eine Verbindung zu der benachbarten Materialbahn 16 bei der Herstellung des schichtweisen Aufbaus 14 bilden. Die Lotschicht 42 bildet bei der Durchführung des zweiten Verfahrensabschnitts eine stoffschlüssige Verbindung zwischen den einzelnen Materialbahnen 16 aus. Alternativ kann die Kombination von Lotschicht 42 und Klebemittelschicht 41 auf der Oberseite oder beidseitig vorgesehen sein.

In Figur 2 c ist eine alternative Ausgestaltung einer Materialbahn 16 zu Figur 2 b dargestellt. Die Lotschicht 42 und Klebemittelschicht 41 sind jeweils getrennt auf einer Seite der Materialbahn vorgesehen.

In Figur 2 d ist eine weitere alternative Anordnung von Klebemittelschicht 41 und Lotschicht 42 zur Materialbahn 16 dargestellt. Beispielsweise ist auf einer Seite der Materialbahn eine Klebemittelschicht 41 und Lotschicht 42 vorgesehen, wohingegen auf der gegenüberliegenden Seite lediglich die Lotschicht 42 angeordnet ist.

Alternativ hierzu ist ein Aufbau gemäß Figur 2 e dargestellt, bei dem auf beiden Seiten der Materialbahn 16 eine Klebemittelschicht 41 vorgesehen ist und nur auf einer Seite der Materialbahn 16 eine Lotschicht 42 angeordnet ist.

In Figur 2 f ist eine Ausführungsform dargestellt, bei der die Klebemittelschicht 41 und Lotschicht 42 eine gemeinsame Schicht bilden. In dieser Schicht ist das Klebemittel in der Lotschicht oder das Lot in der Klebemittelschicht eingebunden. Diese Ausführungsform kann ebenso auch nur auf der Oberseite oder beidseitig der Materialbahn vorgesehen sein.

In Figur 2 g ist eine weitere alternative Ausgestaltung dargestellt. Die Schicht 43 besteht aus einem Pulver mit einer definierten Korngröße, beispielsweise aus Stahl oder dergleichen, wobei in den Zwischenräumen ein Klebemittel vorgesehen ist. Durch diese Ausgestaltung ist ermöglicht, dass ein definierter Abstand zwischen den einzelnen Materialbahnen 16 bereits bei der Herstellung eines Grünlings, also eines schichtweisen Aufbaus 14 in der Bearbeitungsstation 18 der Anlage 12, ermöglicht ist.

In den Figuren 3 a bis c sind einzelne Arbeitsprozesse zur Herstellung eines schichtweisen Aufbaus 14 in einer Bearbeitungsstation 18 dargestellt.

In Figur 3 a ist eine erste Materialbahn 16 auf eine Grundplatte 22 durch Verklebung aufgebracht. Die Materialbahn 16 ist als Metallfolie ausgebildet. In diesem Ausführungsbeispiel ist vorgesehen, dass mit dem Laserstrahl 27 ein Schnittspalt 51 eingebracht wird, um eine erste Kontur für ein Bauteil 11 zu bilden. Alternativ zum Lasergravieren beziehungsweise Sublimationsschneiden kann auch Schneiden mittels eines Oxidspanes geeignet sein. Nach dem Einbringen des Schnittspaltes 51 ist die Materialbahn 16 bezüglich der aufzubauenden Schichten zweigeteilt, und zwar in eine Bauschicht 52 als auch in ein Abfallmaterial 53. Das Lösen des Abfallmaterials 53 und Herausführen kann durch die Absaugeinheit 38 erfolgen. Bevorzugt wird die Klebewirkung zwischen der Grundplatte 22 und dem Abfallmaterial 53 durch Abscannen der Oberfläche des Abfallmaterials 53 aufgeschmolzen. Gleichzeitig kann durch Einwirkung des Laserstrahles 27 die Metallfolie erwärmt und eine Spannung eingebracht werden, welche dazu führt, dass sich zumindest ein Ende 54 des Abfallmaterials 53 aufwölbt und durch Absaugen oder Ansaugen an einer Düse oder Vakuumplatte oder dergleichen abgeführt wird. Sollte die Fläche des Abfallmaterials 53 zum Absaugen zu groß sein, kann vorgesehen werden, dass diese Fläche durch den Laserstrahl in kleinere Flächen durch Einbringung von weiteren Schnittspalten zerkleinert wird.

In Figur 3 b ist ein Arbeitsprozess dargestellt, bei dem bereits mehrere Materialbahnen 16 übereinander angeordnet sind. Bei einem auf der linken Seite dargestellten Stapel der Materialbahnen 16 wird durch den Laserstrahl 27 ein Schnittspalt 51 eingebracht. Aufgrund der vorliegenden Geometrie liegt der Schnittspalt 51 unmittelbar benachbart zu einer darunter liegenden Kante, so dass an dieser Stelle das Abfallmaterial 53 quasi linienförmig auf der darunter liegenden Schicht aufliegt und somit unmittelbar abgenommen werden kann. Auf der rechten Seite des Stapels weist das Abfallmaterial 53 eine flächige Überdeckung zur darunter liegenden Materialbahn 16 auf. In diesem Bereich der Überdeckung ist erforderlich, dass durch Abscannen mittels Laserstrahl 27 die Klebeverbindung gelöst wird.

In Figur 3 c ist ein weiterer Fall während eines Arbeitsprozesses dargestellt. Der Schnittspalt 51 liegt auf gleicher Höhe wie die darunter liegende Schicht oder sogar weiter innerhalb. In einem derartigen Fall kann das Abfallmaterial 53 in den gebildeten Innenraum oder Hohlraum 56 fallen. Aufgrund der sehr dünnen zu verarbeitenden Schichten kann nur über die Absaugvorrichtung 38 das Abfallmaterial 53 herausgelöst werden. Sofern dies aufgrund der Materialdicke nicht erfolgen kann beziehungsweise Beschädigungen an der zuletzt aufgebrachten Schicht auftreten können, wird durch einen zusätzlichen Arbeitsprozess das Abfallmaterial 53 zerkleinert. Gegebenenfalls kann auch vorgesehen sein, dass das Abfallmaterial 53 während der Lasergravur bereits durch die Ansaugvorrichtung 38 gehalten wird, um ein Absinken in den Innenraum 56 zu verhindern.

Die Durchführung der in den Figuren 3 a bis c beschriebenen Arbeitsprozesse sind nicht nur für die in Figur 2 beschriebenen Materialbahnen 16 und deren Alternativen möglich, sondern auch für weitere Materialkombinationen.

Die Absaugeinheit 38 kann vorzugsweise auch nur bezüglich einzelnen Bereichen ansteuerbar sein oder wirken, so dass spezifisch in einzelnen Bereichen das Abfallmaterial 53 entfernt werden kann. Die Haftwirkung des Klebemittels zwischen den Materialbahnen 16 kann bei einer sektionsweisen Ansteuerung der Absaugeinheit 38 vorzugsweise derart eingestellt sein, dass auch ohne Aufhebung der Haftwirkung durch einen Laserstrahl 27 ein Lösen aufgrund der Sogwirkung der Ansaugeinheit 38 für das Abfallmaterial 53 gegeben ist. Dadurch genügt die Einbringung der Kontur durch einen Laserstrahl 27 in die oberste Materialbahn 16 und durch den anschließenden Absaugvorgang kann das Abfallmaterial 53 entfernt werden. Über die Bereitstellung der CAD-Daten, welche auch den Verfahrweg des Lasers steuern, kann die sektionsweise Absaugung der Absaugeinheit 38 angesteuert werden.

In den Figuren 4 a und b ist die Vorrichtung 13 zur Durchführung des zweiten Verfahrenabschnittes näher dargestellt. Der auf der Grundplatte 22 angeordnete schichtweise Aufbau 14 wird in eine Kammer 61 eingesetzt. Diese Kammer 61 weist einen Boden 62 und eine Umfangswand 63 auf. Die Kammer 61 wird durch einen Deckel 64 mit einem an eine Innenwand 66 der Umfangswand 63 angrenzenden Stempel 67 geschlossen. Der schichtweise Aufbau 14 wird in ein Pulverbett in der Kammer 61 eingesetzt bzw. der verbleibende Freiraum in der Kammer 61 wird mit einem Pulver 68 aufgefüllt. Dieses Pulver 68 ist vorzugsweise neutral zu der verwendeten Materialbahn als auch zumindest zu einer Lotschicht, Klebemittelschicht oder einer weiteren Schicht, welche beispielsweise ein Flussmittel oder Schweißzusatzmittel aufweist. Das Pulverbett wird aus einem nicht lötbaren und schwer sinterbaren Pulver wie beispielsweise Bornnitrid oder Graphit gebildet. Das Pulver 68 wird bis zu einem bestimmten Grad verdichtet, um die Fixierung der Schichten zueinander zu gewährleisten.

In der Kammer 61 erfolgt ein Verbindungsprozess, bei welchem zwischen den einzelnen Materialbahnen eine stoffliche Verbindung hergestellt wird. Die Kammer 61 wird aufgeheizt., um ein Entfernen oder Austreiben des Klebemittels zwischen den einzelnen Schichten zu erzielen. Gleichzeitig wird auf den Deckel 64 eine Kraft eingebracht, um eine gleichmäßige stoffschlüssige Verbindung zwischen den einzelnen Materialbahnen herzustellen. Während dem Austreiben des Klebemittels erfolgt eine Schrumpfung des Bauteils in Bezug auf die Bauteilhöhe, wobei die Schrumpfung des Bauteils durch das Nachführen des Stempels 67 ausgeglichen wird. Das den schichtweisen Aufbau 14 umgebende Pulver 68 bewirkt gleichzeitig, dass die einzelnen Schichten in der übereinander gestapelten Lage keine Relativbewegung zueinander ausführen und somit ihre exakte Position zueinander beibehalten, obwohl die Klebeverbindung zwischen den einzelnen Schichten aufgrund des Austreiben des Klebemittels aufgehoben ist.

Bei der Verwendung von Materialbahnen 16, welche zumindest eine Lotschicht aufweisen, wird durch eine weitere Erhöhung der Temperatur in der Aufheizphase das Lot verflüssigt, um eine Materialverbindung einzugehen. Das Bauteil erkaltet nach der Lötverbindung vorzugsweise unter Aufrechterhaltung des Druckes und wird im Anschluss daran aus dem Pulverbett herausgenommen. Es erfolgt eine Reinigung der Oberflächen des Bauteils 11.

Bei der Herstellung eines schichtweisen Aufbaus 14 mit Materialbahnen, welche lediglich zumindest eine Klebemittelschicht aufweisen oder gegebenenfalls zusätzlich zur Klebemittelschicht eine weitere Schicht für Flussmittel oder Schweißzusatzmittel, werden die Temperatur und der Druck derart erhöht, dass zwischen den Materialbahnen 16 eine Schweißung, insbesondere eine Diffusionsverschweißung erfolgt.

Bei der Herstellung eines schichtweisen Aufbaus 14 mit einer Materialbahn 16 gemäß Figur 2 g ist ermöglicht, dass durch die Metallpulverschicht 43 der Abstand zwischen den beiden Materialbahnen 16 quasi konstant bleibt und in der Aufheizphase einerseits das Klebemittel ausgetrieben wird und durch Bereitstellung von Lot in dem Pulver aufgrund von Kapillarwirkung eine stoffliche Verbindung zwischen den Materialbahnen 16 durch eine Lotschicht hergestellt wird. Diese Ausführungsform weist den Vorteil auf, dass bereits bei der Herstellung des Grünteils in der Anlage 12 ein exaktes Baumaß in Z-Richtung erzielt werden kann.

Der Wärmeprozess in der Kammer 61 kann unter Schutzgas, Inertgas oder in Vakuum erfolgen. Der Löt- oder Diffusionsschweißvorgang erfolgt in einem Hochtemperaturofen. Dabei ist es denkbar nach dem Chargierprinzip zu arbeiten, dass heißt, die Kammer 61 wird in einem kalten Zustand in einen Ofen gegeben. Im Anschluss daran wird die Anheizphase und der Wärmprozess gefahren und der Tiegel bzw. die Vorrichtung 13 wird später im kalten Zustand wieder entnommen. Alternativ kann ein Schleusensystem vorgesehen sein, durch welches der Tiegel bzw. die Vorrichtung 13 in einen vorgeheizten Ofen eingebracht werden. Die Schleuse dient dann zur Überbrückung des Temperaturunterschiedes und zum Aufrechterhalten der erforderlichen Ofenatmosphäre, um den Löt- oder Schweißvorgang durchzuführen. Durch dieses zweistufige Verfahren kann die Zykluszeit für den Verbindungsprozess reduziert werden.

Die Herstellung eines belastbaren Bauteils oder Prototyps durch das erfindungsgemäße zweistufige Verfahren weist den Vorteil auf, dass ein Bauteil mit einer hohen Genauigkeit unter Verwendung von unterschiedlichen Materialien, insbesondere höher temperaturbeständigen Materialen, herstellbar und darüber hinaus frei von inneren Spannungen ist. Durch die Vorfixierung mit einem Klebemittel zur Herstellung des schichtweisen Aufbaus 14, kann eine exakte Herstellung des Grünteils ermöglicht sein. In dem zweiten Verfahrensabschnitt wird durch das Einbringen des schichtweisen Aufbaus 14 in ein Pulverbett die Geometrie aufrecht erhalten und alle Materialbahnen 16, welche den schichtweisen Aufbau 14 bilden, werden gleichmäßig erwärmt und gleichmäßig mit Druck beaufschlagt, um eine Löt- oder Schweißverbindung zwischen den einzelnen Materialbahnen 16 zur Herstellung einer stofflichen Verbindung zu schaffen.

Die erfindungsgemäße Ausgestaltung weist darüber hinaus den Vorteil auf, dass bei der Verwendung von Metallfolien als Materialbahnen ein vollmetallischer Körper hergestellt wird, der eine hohe mechanische und thermische Belastbarkeit aufweist. Ebenso kann die Herstellung eines keramischen Körpers erfolgen. Darüber hinaus ist die Baugeschwindigkeit sehr hoch, da in einem ersten Verfahrensabschnitt die aufgebrachten Schichten konturiert werden und in einem zweiten Verfahrensabschnitt die aufgebrachten Schichten stofflich miteinander in Verbindung gebracht werden. Dadurch kann die Herstellung mehrerer Bauteile parallel erfolgen, wobei gleichzeitig eine hohe Genauigkeit als auch eine Bauteilevielfalt ermöglicht ist.

## Patentansprüche

1. Verfahren zur Herstellung eines aus mehreren Schichten bestehenden dreidimensionalen Bauteils (11),
wobei in einem ersten Verfahrensabschnitt
- eine zumindest einseitig mit Klebemittel (26) beschichtete Materialbahn (16) auf einer Grundplatte (22) oder einer zuvor aufgebrachten Materialbahn (16) in einer Bearbeitungsstation (18) aufgebracht wird, und
- eine Kontur in die oberste Materialbahn (16) eingeschnitten wird, durch die eine Bauschicht (52) und ein Abfallmaterial (53) ausgebildet werden und das Abfallmaterial (53) entfernt wird,
und in einem zweiten Verfahrensabschnitt
- der schichtweise Aufbau (14) zumindest teilweise von einem Pulver (68) umgeben in eine Kammer (61) eingesetzt wird,
- die Kammer (61) in einer Aufheizphase auf eine Temperatur aufgeheizt wird, welche höher als eine Verdampfungstemperatur des zwischen den einzelnen Materialbahnen (18) vorgesehenen Klebemittels ist und
- zwischen den einzelnen Materialbahnen (16) des gesamten schichtweisen Aufbaus (14) durch zumindest eine Wärmebehandlung eine zumindest teilweise stoffschlüssige Werkstoffverbindung durch einen Löt-, Schweiß- oder Sinterprozess hergestellt wird.

2. Verfahren nach Anspruch 1, **dadurch gekennzeichnet, dass** die Kammer (61) mit einem zum schichtweisen Aufbau (14), zum Klebemittel, zum Lotmittel, zum Schweißmittel oder Zusätzen, neutralen Pulver (68) gefüllt wird.

3. Verfahren nach einem der Ansprüche 1 oder 2, **dadurch gekennzeichnet, dass** der schichtweise Aufbau (14) senkrecht zu den einzelnen Materialbahnen (16) in der Kammer (61) mit einem Druck belastet wird.

4. Verfahren nach einem der Ansprüche 1 bis 3, **dadurch gekennzeichnet, dass** die Kammer (61) mit einem nicht lötbaren, nicht schweißbaren und schwer sinterbaren Pulver (68), vorzugsweise Bornitrid-Korund- oder Graphitpulver gefüllt wird.

5. Verfahren nach einem der Ansprüche 1 bis 4, **dadurch gekennzeichnet, dass** die Aufheizphase bei einer Temperatur beendet wird, die oberhalb der Verdampfungstemperatur des Klebemittels liegt und dass das zwischen dem schichtweisen Aufbau (14) vorgesehene Lotmittel in einen fließfähigen Zustand übergeführt wird.

6. Verfahren nach einem der Ansprüche 1 bis 5, **dadurch gekennzeichnet, dass** die Aufheizphase bei einer Temperatur beendet wird, die oberhalb der Verdampfungstemperatur des Klebemittels liegt und dass die Materialbahnen (16) des schichtweisen Aufbaus (14) durch Schweißen, insbesondere Diffusionsschweißen, stofflich miteinander verbunden werden.

7. Verfahren nach Anspruch 1, **dadurch gekennzeichnet, dass** der schichtweise Aufbau (14) aus Materialbahnen (16) gebildet wird, welche zumindest auf einer Seite der Materialbahn (16) eine Klebemittelschicht (41) und zumindest eine Lotschicht (42) aufweisen.

8. Verfahren nach Anspruch 1, **dadurch gekennzeichnet, dass** der schichtweise Aufbau (14) aus Materialbahnen (16) erfolgt, welche zumindest auf einer Seite eine Schicht aufweisen, welche aus Klebemittel und Lotmittel zusammengesetzt ist.

9. Verfahren nach Anspruch 1, **dadurch gekennzeichnet, dass** der schichtweise Aufbau (14) aus Materialbahnen (16) erfolgt, welche zumindest auf einer Seite eine Schicht (43) aufweisen, welche aus einem metallischen Pulver mit einer vorgegebenen Körnung und einem Klebemittel besteht.

10. Verfahren nach Anspruch 1, **dadurch gekennzeichnet, dass** eine Schichtdicke der der Bearbeitungsstation (18) zugeführten Materialbahn (16), vorzugsweise unbeschichtet, durch eine Schichtdickenmesseinrichtung (32) ermittelt wird,

11. Verfahren nach Anspruch 10, **dadurch gekennzeichnet, dass** die einzelnen erfassten Schichtdicken der zugeführten Materialbahn (16) addiert und mit Geometriedaten In Z-Richtung aus einem CAD-Modell verglichen werden.

12. Verfahren nach einem der Ansprüche 1 bis 11, **dadurch gekennzeichnet, dass** auf zumindest eine Seite der Materialbahn (16) durch eine Auftragsvorrichtung (34) zumindest eine Klebemittelschicht (41) aufgebracht wird.

13. Verfahren nach einem der Ansprüche 1 bis 12, **dadurch gekennzeichnet, dass** durch einen in der Bearbeitungsstation (18) angeordneten Sensor die tatsächliche Höhe des schichtweisen Aufbaus (14) erfasst wird und vorzugsweise eine Fokuslage eines Laserstrahls für die Einbringung eines Schneldspaltes (51) eingestellt wird.

14. Verfahren nach einem der Ansprüche 1 bis 13, **dadurch gekennzeichnet, dass** zumindest eine Andrückwalze (37) nach dem Positionieren eines neuen Abschnittes einer Materialbahn (16) auf dem schichtweisen Aufbau (14) unter Druck über die oberste Materialbahn (16) geführt wird.

15. Verfahren nach einem der Ansprüche 1 bis 14, **dadurch gekennzeichnet, dass** Bereiche des Abfallmaterials (53) mit einem Laser durch Abscannen erwärmt und zumindest die Haftung der Klebemittelschicht (41) verringert, insbesondere gelöst, wird.

16. Verfahren nach einem der Ansprüche 1 bis 15, **dadurch gekennzeichnet, dass** mit einer Absaugeinheit (38) das Abfallmaterial (53) abgesaugt und von dem schichtweisen Aufbau (14) entfernt wird.

17. Verfahren nach einem der Ansprüche 1 bis 16, **dadurch gekennzeichnet, dass** zumindest die oberste Schicht des schichtweisen Aufbaus (14) durch eine Reinigungsvorrichtung (39), insbesondere durch eine Reinigungswalze oder -bürste, gereinigt wird.

18. Verfahren nach Anspruch 1, **dadurch gekennzeichnet, dass** eine Kontur durch Lasergravieren in die oberste Materialbahn (16) eingebracht wird.

## Claims

1. Process for the production of a three-dimensional component (11) consisting of plural layers, in which in a first process section
- a sheet of material (16) coated at least one-sidedly with adhesive (26) is applied on a baseplate (22) or on a previously applied sheet of material (16) in a processing station (18) and
- a contour is cut into the uppermost sheet of material (16), constituted by a construction layer (52) and a waste material (53), and the waste material (53) is removed
and in which in a second process section
- the laminar structure (14) is placed in a chamber and is surrounded at least partially by a powder (68),
- the chamber (61) is heated in a heating-up phase to a temperature which is higher than a vaporization temperature of an adhesive provided between the individual sheets of material (16) and
- an at least partial material bonding of materials is produced between the individual sheets of material (16) of the whole laminar structure (14) by at least one heat treatment by a solder, weld, or sinter process.

2. Process according to claim 1, **characterized in that** the chamber (61) is filled with a powder (68) which is neutral to the laminar structure (14), to the adhesive, to the solder, to the weld means or additives.

3. Process according to claim 1 or 2, **characterized in that** the laminar structure (14) is loaded with a pressure at right angles to the individual sheets of material (16) in the chamber (61).

4. Process according to one of claims 1 to 3, **characterized in that** the chamber (61) is filled with a powder (68) which cannot be soldered, cannot be welded, and can be sintered with difficulty, preferably boron nitride, corundum, or graphite powder.

5. Process according to one of claims 1 to 4, **characterized in that** the heating-up phase is ended at a temperature which is above the vaporization temperature of the adhesive, and that solder provided between the laminar structure (14) is converted into a flowable state.

6. Process according to one of claims 1 to 5, **characterized in that** the heating-up phase ends at a temperature located above the vaporization temperature of the adhesive, and wherein the sheets of material of the laminar structure (14) are material-bonded together by welding, particularly diffusion welding.

7. Process according to claim 1, **characterized in that** the laminar structure (14) is formed of sheets of material (16), which have at least on one side of the sheet of material (16) an adhesive layer (41) and at least one solder layer.

8. Process according to claim 1, **characterized in that** the laminar structure (14) results from sheets of material (16) which have at least on one side a layer which is composed of adhesive and solder.

9. Process according to claim 1, **characterized in that** the laminar structure (14) is formed of sheets of material (16), which have at least on one side a layer (43) which consists of a metallic powder with a predetermined particle size distribution and an adhesive.

10. Process according to claim 1, **characterized in that** a layer thickness of the sheet of material (16), preferably uncoated, fed to the processing station (18) is determined by a layer thickness measuring device (32).

11. Process according to claim 10, **characterized in that** the individual determined layer thicknesses of the supplied sheets of material (16) sections are added and are compared with geometric data in the Z-direction from a CAD model.

12. Process according to one of claims 1 to 11, **characterized in that** at least one adhesive layer (41) is applied by an application device (34) to at least one side of the sheet of material (16).

13. Process according to one of claims 1 to 12, **characterized in that** the actual height of the laminar structure (14) is sensed by a sensor arranged in the processing station (18) and preferably a focal position of a laser beam is adjusted for the placing of a cut gap (51).

14. Process according to one of claims 1 to 13, **characterized in that** at least one presser roller (37) is guided under pressure over the uppermost sheet of material (16) after the positioning of a new section of a sheet of material (16) on the laminar structure (14).

15. Process according to one of claims 1 to 14, **characterized in that** the regions of the waste material(53) are heated with a laser by scanning, and at least the adhesion of the adhesive layer is reduced, in particular released.

16. Process according to one of claims 1 to 15, **characterized in that** the waste material (53) is sucked away by a suction unit (38) and is removed from the laminar structure (14).

17. Process according to one of claims 1 to 16, **characterized in that** at least the uppermost layer of the laminar structure (14) is cleaned by a cleaning apparatus (39), in particular by a cleaning roller or brush.

18. Process according to claim 1, **characterized in that** a contour is introduced into the uppermost sheet of material (16) by laser engraving.

## Revendications

1. Procédé de fabrication d'un composant tridimensionnel (11) constitué de plusieurs couches, dans lequel, dans une première partie du procédé :
- dans un poste de traitement (18), une bande de matière revêtue au moins d'un côté d'un adhésif (26) est appliquée sur une plaque de base (22) ou sur une bande de matière (16) appliquée préalablement et
- un contour est découpé dans la bande supérieure de matière (16), ce qui forme une couche structurelle (52) et un matériau de chute (53), le matériau de chute (53) étant enlevé,
et dans une deuxième partie du procédé :
- la structure stratifiée (14) entourée au moins en partie par une poudre (68) est insérée dans une chambre (61),
- dans une phase de chauffage, la chambre (61) est chauffée jusqu'à une température supérieure à la température de vaporisation de l'adhésif prévu entre les différentes bandes de matière (18) et
- par au moins un traitement thermique, on réalise par brasage, soudage ou frittage une liaison au moins partiellement en correspondance de matière entre les deux bandes de matière (16) de l'ensemble de la structure stratifiée (14).

2. Procédé selon la revendication 1, **caractérisé en ce que** la chambre (61) est remplie d'une poudre (68) neutre vis-à-vis de la structure stratifiée (14), de l'adhésif, de l'agent de brasage, de l'agent de soudage ou des additifs.

3. Procédé selon l'une des revendications 1 ou 2, **caractérisé en ce que** la structure stratifiée (14) est sollicitée par une pression perpendiculaire aux différentes bandes de matière (16) placées dans la chambre (61).

4. Procédé selon l'une des revendications 1 à 3, **caractérisé en ce que** la chambre (61) est remplie d'une poudre (68) non brasable, non soudable ou difficilement frittable, de préférence une poudre de nitrure de bore, de corindon ou de graphite.

5. Procédé selon l'une des revendications 1 à 4, **caractérisé en ce que** la phase de chauffage est terminée à une température supérieure à la température de vaporisation de l'adhésif et **en ce que** l'agent de brasage prévu entre les couches de la structure stratifiée (14) est amené à l'état liquide.

6. Procédé selon l'une des revendications 1 à 5, **caractérisé en ce que** la phase de chauffage est interrompue à une température supérieure à la température de vaporisation de l'adhésif et **en ce que** les bandes de matière (16) de la structure stratifiée (14) sont reliées matériellement l'une à l'autre par soudage et en particulier par soudage par diffusion.

7. Procédé selon la revendication 1, **caractérisé en ce que** la structure stratifiée (14) est formée de bandes de matière (16) qui présentent au moins sur un côté de la bande de matière (16) une couche d'adhésif (41) et au moins une couche de brasure (42).

8. Procédé selon la revendication 1, **caractérisé en ce que** la structure stratifiée (14) est obtenue à partir de bandes de matière (16) qui présentent sur au moins un côté une couche constituée d'un adhésif et d'un agent de brasage.

9. Procédé selon la revendication 1, **caractérisé en ce que** la structure stratifiée (14) s'obtient à partir de bandes de matière (16) qui présentent sur au moins un côté une couche (43) constituée d'une poudre métallique d'une granulométrie prédéterminée et d'un adhésif.

10. Procédé selon la revendication 1, **caractérisé en ce que** l'épaisseur de la couche de la bande de matière (16) amenée par le poste de traitement (18) de préférence non revêtue est détectée par un dispositif (32) de mesure d'épaisseur de la couche.

11. Procédé selon la revendication 10, **caractérisé en ce que** les différentes épaisseurs de couche détectées de la bande de matière (16) apportées sont additionnées et comparées à des données géométriques dans la direction Z d'un modèle conçu à l'aide d'un ordinateur (CAD).

12. Procédé selon l'une des revendications 1 à 11, **caractérisé en ce qu'**au moins une couche d'adhésif (41) est appliquée par un dispositif d'application (34) sur au moins un côté de la bande de matière (16).

13. Procédé selon l'une des revendications 1 à 12, **caractérisé en ce que** la hauteur effective de la structure stratifiée (14) est détectée par une sonde installée dans le poste de traitement (18) et **en ce que** la position du foyer d'un faisceau laser destiné à réaliser un interstice de découpe (51) est ajustée.

14. Procédé selon l'une des revendications 1 à 13, **caractérisé en ce qu'**au moins un cylindre de poussée (37) est passé sous pression au-dessus de la bande supérieure de matière (16) après qu'un nouveau morceau de bande de matière (16) a été placé sur la structure stratifiée (14).

15. Procédé selon l'une des revendications 1 à 14, **caractérisé en ce que** des parties du matériau de chute (53) sont chauffées par balayage à l'aide d'un laser et **en ce que** l'adhérence de la couche d'adhésif (41) est au moins diminuée et en particulier supprimée.

16. Procédé selon l'une des revendications 1 à 15, **caractérisé en ce qu'**une unité d'aspiration (38) aspire le matériau de chute (53) et le retire de la structure stratifiée (14).

17. Procédé selon l'une des revendications 1 à 16, **caractérisé en ce qu'**au moins la couche supérieure de la structure stratifiée (14) est nettoyée par un dispositif de nettoyage (39) et en particulier par un cylindre ou une brosse de nettoyage.

18. Procédé selon la revendication 1, **caractérisé en ce que** le contour est réalisé par gravure au laser de la bande supérieure de matière (16).
